# EUROPEAN PATENT APPLICATION

(11) **EP 2 518 673 A1**
(43) Date of publication of application: **31.10.2012**
(21) Application number: 10838970.1
(22) Date of filing: 22.12.2010
(51) Int. Cl.: G06Q 30/00, G06F 17/30

(54) **DEVICE THAT PROVIDES CONTENT**

(30) Priority: 22.12.2009 JP 2009291002
(71) Applicant: Atonarp Inc., Tokyo 192-0074 (JP)
(72) Inventor: IMAI, Akira, Tsukuba-shi Ibaraki 305-0047 (JP)
(74) Representative: Körber, Martin Hans
(86) International application number: PCT/JP2010/007456
(87) International publication number: WO 2011/077732

(57) **Abstract**

A search server (30) of the analysis center (10) that provides content related to odors includes: a communication unit (39) that obtains event information (139) from a terminal (100) including an IMS sensor (120); an occurrence cause supplying unit (35) that estimates a combination of chemical substances that are an occurrence cause of an event based on IMS data (129) obtained from a terminal (100) and supplies analysis information (141) including the occurrence cause such as information on the chemical substances to the terminal (100); and a content supplying unit (34) that supplies, when the combination of the plurality of chemical substances includes an already registered recipe (23a) relating to the registered product or service, content (23c) associated with the registered product or service to the terminal (10).

## Description

### TECHNICAL FIELD

The present invention relates to a device and method that supply content to a terminal.

### BACKGROUND ART

WO2006/013396 (Japanese Patent Publication No. 2008-508693) discloses an ion mobility spectrometer with an ion filter in the form of at least one ion channel that includes a plurality of electrodes. WO2005/052546 (Japanese Patent Publication No. 2007-513340) discloses an ion mobility-based system, method, and apparatus for analyzing samples.

### DISCLOSURE OF THE INVENTION

The olfactory sense is defined as one of the senses and is realized by receiving molecules of specified chemical substances at receptors. The present invention has an object of providing information to a terminal equipped with an ability that corresponds to the olfactory sense.

Compact sensors, such as ion mobility sensors, which are capable of detecting chemical substances in air have been developed and research is being carried out into mounting such sensors in mobile terminals such as mobile phones and PDAs. Research has also begun into analyzing chemical substances included in air using a spectrometric-type sensor such as an ion mobility sensor and reproducing various odors (smells, scents). Although it is known that similar odors can be reproduced by combining a limited number of sources of odors, it is only possible to reproduce odors that are only imitation, and odors with a high product value like that of original perfumes cannot be reproduced. However, if a sensor capable of detecting chemical substances were mounted in a mobile terminal or the like and the source of the odor or the combination (recipe) could be precisely determined, there is the risk that the value of products that are valued for their odor would fall. On the other hand, by mounting a sensor capable of detecting chemical substances in a mobile terminal or the like, it is possible to detect threats such as poisons at an early stage and prevent accidents from the outset and to detect odors relating to the health of the human body and thereby carry out health management. This means that there are great advantages to mounting a sensor capable of detecting chemical substances in a mobile terminal.

One aspect of the present invention is an apparatus including: a communication unit that exchanges information with a terminal equipped with a detection unit that acquires chemical substance-related information relating to chemical substances included in air (the atmosphere, external air); a function (functional unit) of acquiring that acquires, from the terminal, event information including a change in the chemical substance-related information obtained by the detection unit; a function (functional unit, occurrence cause supplying unit) that estimates at least one chemical substance that is an occurrence cause of the event based on the event information and supplies occurrence cause information including information on the at least one chemical substance (such as names of the chemical substances) to the terminal; and a function (functional unit) of supplying content ( content supplying unit) that operable when the occurrence cause of the event includes a plurality of chemical substances and a combination of the plurality of chemical substances includes a combination of the plurality of chemical substances that have already been registered relating to the first product or service, to supply content associated with the first product or service in place of the combination of the plurality of chemical substances that have already been registered to the terminal. The supplying of content may be the supplying of content itself or the supplying of an address such as a URL that supplies content.

This apparatus is typically realized by one or a plurality of information processing apparatuses such as a server equipped with a CPU and memory. Such apparatus includes a system that provides information via a communication network such as a computer network (like the Internet or an intranet) or a public telephone network.

If the occurrence cause of an event includes a plurality of chemical substances and the combination of the plurality of chemical substances includes a combination of a plurality of chemical substances that are already registered relating to the first product or service, the apparatus provides content associated with the first product or service to the terminal in place of the combination of a plurality of chemical substances that are already registered. Accordingly, for the product or service that is related to an odor, such as a perfume, and whose odor has a product value, in place of the recipe, it is possible to supply content relating to the product or service, such as promotion or advertising for the product or service, promotion or advertising for the provider, or other user services.

Accordingly, when the odor of a product or service has been detected at a user terminal, the recipe of such odor will not be revealed to the user. In addition, when the odor of a product or service has been detected at a user terminal, it is possible to deliver promotion or advertising for products or services relating to such odor to the user and therefore possible to reliably provide promotion or advertising for products or services related to such odor to a user who is the target for such promotion.

The apparatus should preferably also include a function (function unit) that bills the provider of the content depending on the supplying of content by the function that supplies content. There are a variety of billing methods, so that billing may be carried out in keeping with the frequency of provision of content or may be carried out when products or services are registered in a database to enable content to be provided. In many cases, the provider of content will be the supplier or provider of products or services or a third party that is entrusted by such provider to provide content and will therefore receive a benefit from content being supplied to a terminal. In addition, since billing will encourage the information provider using the apparatus to actively supply content, it is possible to prevent the disclosing of recipes of products or services to users from the outset.

The chemical substances included in combinations of a plurality of chemical substances that are already registered do not need to be sources of an odor, but many products or services where the recipe of chemical substances has a high product value do relate to odors. Typical chemical substances that are included in a combination of a plurality of chemical substances that is already registered will be chemical substances of natural origin that are the source of an odor.

In addition, if the detection unit includes a specified first type of sensor that outputs chemical substance-related information, the function of acquiring of the apparatus should preferably acquire event information including a first type of chemical substance-related information that is unique to the first type of sensor, and the function of supplying content should preferably include a function (function unit) operable when the first type of chemical substance-related information includes a specifying pattern produced when a combination of a plurality of chemical substances that have already been registered is detected by the first type of sensor, to supply content associated with the first product or service to the terminal in place of the combination of the plurality of chemical substances that have already been registered.

By providing specifying patterns that can be directly compared with the output of the first type of sensor used to detect the chemical substances, it is possible to supply content associated with a product or service to a user terminal in a shorter time and more reliably. It is also possible to suppress the erroneous supplying of recipes of odors and the like relating to products or services to a user terminal.

The function of supplying content should preferably also include a function (function unit) operable when the first type of chemical substance-related information includes a product/service unique pattern produced when an odor relating to the first product or service is detected by the first type of sensor, to supply, to the terminal, content associated with the first product or service in place of the combination of the plurality of chemical substances that have already been registered. By providing product/service unique patterns produced when odors and the like relating to products or services are directly detected by the first type of sensor, it is possible to supply content associated with a product or service to a user terminal in a shorter time and more reliably. It is also possible to suppress the erroneous supplying of recipes of odors and the like relating to products or services to a user terminal.

A typical example of the first type of sensor is a spectrometric-type sensor that outputs the chemical substance-related information as a spectrum (waveform data) and the specifying patterns include spectral features (waveform characteristics, spectral characteristics, a spectral signature). A typical example of a spectrometric-type sensor is an ion mobility sensor. The function of supplying content matches or collations the spectrum obtained from the spectrometric-type sensor with spectral features included in the specifying patterns. The function of supplying content may extract the spectral features from the obtained spectrum or may synthesize a spectrum for matching purposes from the spectral features.

Another aspect of the present invention is an apparatus including: a communication unit that exchanges information with a terminal including a detection unit (substance detection unit) that acquires chemical substance-related information relating to chemical substances included in air; and a function (functional unit) of acquiring, from the terminal, event information including a change in the chemical substance-related information obtained by the detection unit, wherein the substance detection unit includes a first type of sensor and the function of acquiring acquires the event information that includes a first type of chemical substance-related information that is unique to the first type of sensor. The apparatus may further include a function (functional unit) of supplying, when the first type of chemical substance-related information includes a specifying pattern produced when a combination of a plurality of chemical substances that have already been registered relating to a first product or service is detected by the first type of sensor or when the first type of chemical substance-related information includes a product/service unique pattern produced when an odor relating to the first product or service is detected by the first type of sensor, content associated with the first product or service. In addition, the apparatus should preferably also include a function (functional unit) that bills the provider of the content depending on the supplying of content by the function of supplying content.

Yet another aspect of the present invention is a method where an apparatus equipped with a CPU and memory supplies information, the method including the following steps.
1. The apparatus acquiring, from a terminal equipped with a detection unit that acquires chemical substance-related information relating to chemical substances included in air, event information including a change in the chemical substance-related information obtained by the detection unit.
2. Estimating at least one chemical substance that is an occurrence cause of an event based on the event information and supplying occurrence cause information including information on the at least one chemical substance to the terminal.
3. Supplying, when the occurrence cause of the event includes a plurality of chemical substances and a combination of the plurality of chemical substances includes a combination of a plurality of chemical substances that have already been registered relating to a first product or service, content associated with the first product or service to the terminal in place of the combination of the plurality of chemical substances that have already been registered.

The method should preferably further include billing the provider of the content depending on (in keeping with) the supplying of content.

If the detection unit includes a first type of sensor and the first step described above includes acquiring the event information including a first type of chemical substance-related information that is unique to the first type of sensor, the third step should preferably further include the following step.
3a. Supplying, when the first type of chemical substance-related information includes a specifying pattern produced when a combination of a plurality of chemical substances that have already been registered is detected by the first type of sensor or a product/service unique pattern produced when an odor relating to the first product or service is detected by the first type of sensor, content associated with the first product or service to the terminal in place of the combination of the plurality of chemical substances that have already been registered.

Yet another aspect of the present invention is a method including the following steps.
11. Acquiring, from a terminal equipped with a first type of substance detection sensor that acquires chemical substance-related information relating to chemical substances included in air, event information including a change in a first type of chemical substance-related information that is unique to the first type of substance detection sensor; and
12. Supplying, when the first type of chemical substance-related information includes a specifying pattern produced when a combination of a plurality of chemical substances that have already been registered relating to a first product or service is detected by the first type of substance detection sensor or when the first type of chemical substance-related information includes a product/service unique pattern produced when an odor relating to the first product or service is detected by the first type of substance detection sensor, content associated with the first product or service.

This method should preferably also include the following step.
13. Billing the provider of the content depending on (in keeping with) the supplying of content.

Yet another aspect of the present invention is a program (or program product) executed by an apparatus including a CPU and a memory, the program including instructions for executing the control described above. Such program (program product) may be provided having been recorded on a recording medium (such as an optical disc) or may be provided via a computer network such as the Internet.

### BRIEF DESCRIPTION OF THE DRAWINGS

FIG. 1 is a diagram showing an overview of a system that provides content.
FIG. 2 is a flowchart showing the processing of a search server.

### DETAIL DESCROPTION

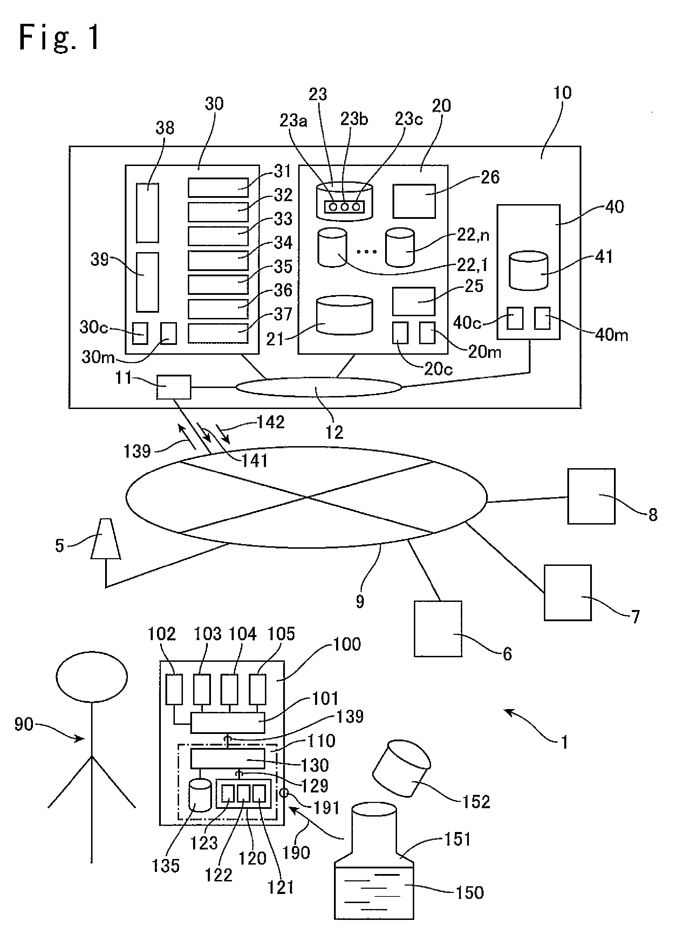

FIG. 1 shows an overview of a system that provides content relating to odors (small, scent, perfume). This system 1 includes an odor analysis center (or simply "analysis center") 10 that communicates with various types of terminal via a computer network such as the Internet 9 and provides information relating to odors (smells, scents, perfumes, aromas), a server 8 of a manufacturer (provider) that provides products and services, a server 7 of a content provider (CP) that provides content relating to products or services, a billing management server 6 that manages billing for the manufacturer or the CP, a base station 5 that provides a communication environment for a user terminal using various communication method such as a telephone network and a wireless LAN, and a terminal (including a mobile phone, cellular phone, a PDA, and the like) 100 that can be carried by the user 90 personally. A detection unit 110 including a sensor 120 for detecting an odor (or the source of an odor) is incorporated in the terminal 100.

The olfactory sense is defined as one of the senses and is realized by receiving molecules of specified chemical substances at receptors. Accordingly, although the detection of chemical substances included in the atmosphere (air) or the like is described below as an "olfactory sense" or "odors/smells", in the system (apparatus) described below, it is also possible to detect chemical substances that cannot be detected by humans and animals as an odor.

Smells and odors are caused by chemical substances such as compounds and gases included in air in the periphery. In the present specification, the expression "chemical substance" includes compounds, molecules, and elements, and includes products without being limited to constituents or compositions. The expression "chemical substances" also includes organic and inorganic substances. It is said that many chemical substances capable of being detected by the olfactory sense include chemical functional groups. One functional group is hydrocarbons, with an example of such being alkanes (chained saturated hydrocarbons), though hydrocarbons are not limited to such. The alkane group includes ethane, methane, propane, butane, and the like as chemical substances. The functional groups are not limited to hydrocarbon groups, and the amino group and the like can be given as an example of a functional group containing nitrogen and the alcohol group and the ketone group can be given as examples of functional groups that contain oxygen. These are mere examples of chemical substances and functional groups.

It is believed that the atoms in molecules of a functional group are subject to the same or similar chemical reactions and exhibit a characteristic in having a common odor. Volatile organic materials and organic compounds typically stimulate the olfactory sense as odors. The chemical substances may be gases (i.e., a gas itself) such as carbon monoxide or carbon dioxide. The chemical substances may also be inorganic substances, such as carbon, aluminum, or nitrogen.

One analyzer that is compact, portable, and capable of detecting the cause of an odor is the ion mobility sensor described above, which has been provided as a chip-type device using MEMS. An ion mobility sensor (or "ion mobility spectrometer") ionizes substances (molecules) present in the air and outputs a spectrum (output pattern or air quality pattern) based on differences in mobility between the ionized molecules, with field asymmetric waveform ion mobility spectrometry (FAIMS, Field Asymmetric wave form Iron Mobility Spectrometry) and differential ion mobility spectrometry (DIMS, Differential Ion Mobility Spectrometry) as known methods.

A spectrometry-type (analysis-type) sensor of this type, hereinafter referred to in general as an "IMS sensor", inputs ionized molecular flows into an asymmetric electric field that changes from low voltage to high voltage and outputs the result of filtering such flows based on field mobility of the ions. The "micro DMx" made by SIONEX and the FAIMS device made by OWLSTONE can be given as examples of compact IMS sensors that are commercially available.

In an IMS sensor, as information relating to chemical substances included in a fluid (typically a carrier gas such as air or nitrogen gas), it is possible to detect an ion current that changes in accordance with the two variables of the voltage Vd (dispersion voltage or electric field voltage (Vrf), alternating current) and the voltage Vc (compensation voltage, direct current). Accordingly, three-dimensional data (waveform data, spectra) including such information and two-dimensional spectra where a parameter in one of the three dimensions is fixed are obtained as information relating to chemical substances. It is also possible to acquire spectral features (a spectral signature, spectral characteristics and features) that show the elements of a spectrum as information related to chemical substances. As one example, spectral features include a spectral peak amplitude, spectral peak width and spectral peak slope, spectral peak interval, number of spectral peaks, relative positional shift of spectral peaks due to changes in processing conditions, spectral discontinuity points, a Vrf to Vcomp characteristic, and the like.

The detection unit (sensor) that obtains information relating to the chemical substances may be a mass spectrometry-type sensor so that M/Z (mass-to-charge) is obtained as the information related to the chemical substances included in the fluid.

An analysis-type sensor that uses ion mobility or the like has widespread applicability compared to a sensor that is sensitive to specific constituents (chemical substances) and is capable of detecting the presence and intensity (concentration) of almost all constituents with a similar level of precision in the range where analysis is possible. The information on chemical constituents (chemical substances) detected by the sensor includes intensity variations (which include concentration variations, presence variations, and other changes and variations detected by the sensor) of chemical substances (which includes at least one of compounds, molecules, and elements).

A wide variety of sensors including a chemical sensor that conforms to IEEE 1451, a liquid crystal sensor (or QCM (Quartz Crystal Microbalance)), an electrochemical sensor, a SAW (Surface Acoustic Wave) device, an optical sensor, gas chromatography, liquid chromatography, and a MOS (Metal Oxide Semiconductor) sensor can be given as examples of a sensor that acquires information related to chemical substances.

The information (chemical substance-related information) relating to the chemical substances outputted from the sensor will often differ according to the type of sensor for detecting the chemical substances, and there is a high probability that different types of chemical substance-related information will be outputted for the same chemical substance. It is important to normally handle such chemical substance-related information of different types in a unified way, for example, by mapping the information of different types onto a space showing chemical substances. However, a certain amount of processing time is required to process different types of chemical substance-related information in a unified way.

In the present specification, chemical substance-related information that is unique to a sensor and has been obtained from different types of sensor is indicated by appending the name of the sensor type. For example, the chemical substance-related information obtained by an IMS-type sensor is referred to as "IMS data". Also, chemical substance-related information that has been processed such as by mapping chemical substance-related information that is unique to a sensor onto the same space showing chemical substances and can therefore be handled in a unified or generalized manner is referred to as "universalized (generalized, standardized)" data. One example of standardized data for general purpose is FCWS data proposed by the applicant of the present application. Such data is produced by mapping (assigning) chemical substance-related information that is unique to a sensor to a frequency space that is a space that is characterized to chemical substances according to FCWS (Functionally (i.e., Functional Group) Classification Wave Shaping) technology to convert intensity information showing the presence of chemical substances to intensity information on frequency bands.

The terminal 100 is typically a mobile phone including hardware resources such as a CPU and memory. The terminal 100 includes a communication unit 102 that is capable of accessing the Internet 9 via the base station 5, an output interface 103 that displays or outputs various information, an input interface 104 that inputs various information, an acquisition interface 105 that acquires various information, and a control unit 101 that controls such elements. A display and speakers can be given as examples of the output interface 103. A keyboard, a touch panel, and a microphone can be given as examples of the input interface 104. A camera, GPS, a thermometer, and a hygrometer can be given as examples of the acquisition interface 105.

The user terminal 100 further includes the detection unit 110 that detects information relating to chemical substances. The detection unit 110 includes the sensor 120, a device (Olfaction Processor or "OLP") 130 that provides an olfaction function, and a library 135 storing information for converting data 129 that is unique to the sensor 120 to standardized data and for locally determining odors. The OLP 130 may be realized by a CPU using software, may be realized using a chip such as a dedicated ASIC, or may be realized using a chip on which circuits can be reconfigured.

The sensor used in the detection unit 110 according to the present embodiment, that is, a first type of sensor of chemical substance-related information that relates to chemical substances included in air (external air, the atmosphere) 190 at a sampling point 191 is an IMS sensor 120. The IMS sensor 120 includes an ionizing unit 121 that ionizes the chemical substances included in the drawn-in external air 190 using radiation, light, an electric field, or the like, an electric field control filter 122 that controls the movement of the ionized chemical substances, and a unit 123 that outputs IMS data 129 as information relating to the chemical substances included in the external air 190 from the movement amounts of the ionized chemical substances. As described earlier, the IMS data 129 includes a spectrum and/or spectral features.

The OLP 130 according to the present embodiment generates event information 139 including FCWS data produced by mapping the IMS data 129 and the IMS data 129 itself, and provides the event information 139 via the communication unit 102 to the analysis center 10. For example, when the top of a bottle 151 containing perfume 150 is opened and the vessel 151 is placed near the terminal 100, the IMS sensor 120 detects constituents (chemical substances) of the perfume 150 included in the external air 190 and outputs data (IMS data) 129 relating to such chemical substances. The OLP 130 detects the occurrence of an event based on a change in the IMS data 129 and outputs the event information 139 which includes a change (IMS data 129 and FCWS data) in the chemical substance-related information. The event information 139 may include only one of the IMS data 129 and the FCWS data.

The analysis center 10 includes a gateway server 11 connected to the Internet 9, an intranet 12 connected via the gateway server 11 to the Internet 9, a search server 30 connected via the intranet 12 to the Internet 9, a data server 20 connected to the intranet 12, and a content server 40 connected to the intranet 12. The content server 40 includes a library 41 storing products (goods) and services relating to odors (smells) such as perfumes and fragrances and content provided by manufacturers that provide such products and services or URLs for providing such content. Such servers 20, 30, and 40 may be configured as information processing apparatuses (servers) respectively including CPUs 20c, 30c, 40c and memories 20m, 30m, and 40m, may be configured using a shared information processing apparatus, or may be configured using a larger number of information processing apparatuses.

The data server 20 includes a general-purpose chemical substance database (or "general-purpose database") 21, chemical substance databases 22.1 to 22.n for each sensor type, and a product/service database 23. The general-purpose chemical substance database 21 includes FCWS data that is standardized general-purpose data and information on chemical substances specified by the FCWS data, and is a database for specifying a chemical substance from FCWS data. The chemical substance databases 22.1 to 22.n each include data that is unique to a sensor such as the IMS data 129 and information (specifying patterns) on chemical substances specified by such unique data, and are databases for specifying or identifying a chemical substance based on data, such as the IMS data 129, that is unique to a sensor. The specifying patterns may be the spectra themselves outputted from the IMS sensor 120 or may be data including spectral features (a spectral signature, spectral characteristics and features) showing elements of an output spectrum of the IMS sensor 120. The spectral features include a spectral peak amplitude, spectral peak width and spectral peak slope, spectral peak interval, number of spectral peaks, relative positional shift of spectral peaks due to changes in processing conditions, spectral discontinuity points, a Vrf to Vcomp characteristic, and the like, but are not limited to such.

The product/service database 23 includes chemical substance combinations (recipes) 23a that are the source of odors (smells, fragrances) relating to products or services (the first products or services, hereinafter referred to as "registered products" to represent products or services that have been registered) for which information relating to content has been registered in the content server 40, product/service unique patterns 23b produced when odors relating to the registered products are detected by each type of sensor such as the I MS sensor 120, and information (content information) 23c that is identification information for the registered products and includes information for providing content from the content server 40, the server 8 of the manufacturer or the server 7 of the CP to the user terminal 100. The product/service unique patterns 23b may be the spectra themselves outputted from the IMS sensor 120 or may be data including spectral features (a spectral signature, spectral characteristics and features) showing elements of an output spectrum of the IMS sensor 120. Note that in the following description, the product/service unique patterns 23b are also referred to as the "unique patterns 23b".

By matching or verifying the plurality of chemical substances specified from the standardized data or the data that is unique to a sensor (such as the IMS data 129) against the registered combinations (recipes) of a plurality of chemical substance 23a using the product/service database 23, it is possible to specify a registered product and to specify content relating to the registered product or an address that supplies such content. Also, by using the product/service database 23 to match data that is unique to a sensor, such as the IMS data 129, against the unique patterns 23b, it is possible to specify a registered product and to specify content relating to the registered product or an address that supplies such content.

The data server 20 includes a chemical substance updating unit 25 for updating the chemical substance databases 21 and 22.1 to 22.n and a product/service updating unit 26 for updating the product/service database 23. On newly finding a pattern of FCWS data corresponding to a chemical substance, the chemical substance updating unit 25 registers such pattern in the general-purpose database 21 to constantly improve the detection, determination, and estimation precision of chemical substances using the FCWS data. In the same way, on newly finding a specifying pattern of the IMS data 129 corresponding to a chemical substance, the chemical substance updating unit 25 registers such specifying pattern in the unique database 22.1 to constantly improve the detection, determination, and estimation precision of chemical substances using the IMS data 129. Also, if it becomes possible to use a chemical substance detecting sensor of a new type, the chemical substance updating unit 25 generates a chemical substance database for such new type of sensor. Information for converting the data of such new type of sensor to standardized FCWS data is also generated.

When a new product or service is registered, the product/service updating unit 26 registers the new recipe 23a of an odor and/or a product/service unique pattern 23b for each sensor type relating to such newly registered product or service in the product/service database 23. As the recipe 23a, a combination of a plurality of chemical substances included in the recipe 23a may be registered or a specifying pattern for when a combination of a plurality of chemical substances is detected by the IMS sensor 120 may be registered. Also, when it becomes possible to use a new type of sensor that outputs chemical substance-related information, the product/service unique patterns 23b produced when odors related to the registered products are detected by such new type of sensor are acquired and registered in the product/service database 23.

The search server 30 includes a communication unit 39 that communicates with the user terminal 100 via the intranet 12 and the Internet 9, a management unit 38 that carries out user authentication and billing for the user and/or the content provider, a first search unit 31, a second search unit 32, a third search unit 33, a content supplying unit 34, a chemical substance information supplying unit 35, a warning supplying unit 36, and an interface unit 37 that acquires the event information 139 from the user terminal 100.

If chemical substance-related information (IMS data) 129 that is unique to the IMS sensor 120 is included in the event information 139 obtained via the interface unit 37 from the terminal 100, the first search unit 31 matches or verifies such information against the product/service unique patterns 23b in the product/service database 23. The product/service unique patterns 23b are patterns (fingerprints) produced when an odor relating to a product or products among the registered products (first products or services) have been detected by the IMS sensor 120, and can enable the odor of the registered product to be determined with the highest reliability and at high speed.

If chemical substance-related information (IMS data) 129 that is unique to the IMS sensor 120 is included in the event information 139 obtained via the interface unit 37 from the terminal 100, the second search unit 32 matches or verifies the IMS data 129 against the specifying patterns registered in the chemical substance database 22.1 for the IMS sensor and estimates the chemical substances (a combination of a plurality of chemical substances) based on the IMS data 129 included in the event information 139. Such matching (specifying) can be carried out using pattern matching or a variety of technologies relating to pattern recognition, such as a neural network. It is also possible to adopt a standard algorithm such as PCA (Principle Component Analysis) or LDA (Linear Discriminate Analysis) to extracting characteristics. It is also possible to enable the second search unit 32 to specify the chemical substances included in the IMS data 129 using the specifying patterns in the database 22.1 and then compare the combination of such chemical substances with the recipes 23a registered in the product/service database 23. The second search unit 32 may also use the specifying patterns in the database 22.1 to convert the recipes 23a to information that can be compared with the IMS data 129 and match such information against the IMS data 129.

The third search unit 33 matches the standardized data (FCWS data) included in the event information 139 obtained via the interface unit 37 from the terminal 100 against the patterns of chemical substances in the general-purpose chemical substance database 21, and estimates chemical substances (a combination of a plurality of chemical substances) based on the FCWS data in the event information 139. The largest number of chemical substances are registered in the general-purpose chemical substance database 21 and therefore the third search unit 33 should fundamentally be able to specify the chemical substances included in the event information 139 and send back analysis information 141 including chemical substances (a combination of a plurality of chemical substances) that are the occurrence cause of the event to the user terminal 100.

If the first search unit 31 finds that the unique pattern 23b of a registered product is included in the IMS data 129 of the event information 139, the content supplying unit 34 sends back analysis information 142 including the content information 23c of the corresponding registered product to the user terminal 100. If the combination of chemical substances estimated by the second search unit 32 or the third search unit 33 based on the IMS data 129 or the standardized data (FCWS data) matches, is similar to, or has a high probability of being the same as the recipe 23a of a registered product, the content supplying unit 34 sends back the analysis information 142 including the content information 23c of the corresponding product or service to the terminal 100. Accordingly, at the user terminal 100, content relating to a product or service is displayed or outputted in place of information that directly shows the chemical substances detected by the IMS sensor 120.

Typical examples of content associated with a product or service are a name of the product or service, information (name and location of provision) specifying the provider (manufacturer) who provides such product or service, promotion or advertising about such product or service, and promotion or advertising of products and services that relate to such product or service and can be additionally provided to the user. Such content may be provided from the content server 40 of the analysis center 10, may be provided from the server 8 of the manufacturer, and/or may be provided from the server 7 of the content provider.

The recipes (combinations of chemical substances) that are the targets of the matching process against the combination of chemical substances estimated from the IMS data 129 or the standardized data may be generated in units or grades of the chemical substances registered in the general-purpose database 21, in units or grades of the chemical substances registered in the database 22.1, may be given by recording combinations of names or elements of chemical substances (for example, names of compounds) of natural origin that are the sources of specific odors, or may be recorded as combinations of names or elements of sources (such as types of plants like fruit and flowers, types of animals, and names of spices) of chemical substances of natural origin that are the sources of odors. By synthesizing and/or combining such elements of an odor written in a recipe 23a using a patterns for chemical substance registered in the general-purpose database 21 or the database 22.1, it is possible to generate data that can be compared with the standardized data or the IMS data 129.

If a recipe that matches, is similar to, or is capable of being determined to be the same with a high probability as the combination of chemical substances estimated by the second search unit 32 or the third search unit 33 based on the IMS data 129 or the standardized data (FCWS data) is not included in the recipes of the registered products, the occurrence cause supplying unit 35 sends back analysis information 141 that includes the estimated combination of chemical substances to the user terminal 100. Accordingly, information showing a chemical substance or a combination of chemical substances detected by the IMS sensor 120 is displayed or outputted at the user terminal 100. The information showing the chemical substance or combination of chemical substances may be the names of the chemical substances, may be the names of chemical substances of natural origin that are the sources of specific odors (for example, names of compounds), may be names of sources of chemical substances of natural origin that are the causes of odors (such as the names of types of plants like fruit and flowers, types of animals, and names of spices), or may be other typical names showing chemical substances, a combination of chemical substances, or the source thereof.

The user is capable of selecting what information is to be included (what information is to be acquired) in the analysis information 141 including the estimated combination of the chemical substances. However, if it is determined at the content supplying unit 34 that an odor (combination of chemical substances, recipe) is related to a registered product or service, the content information 23c relating to the registered product predefined or preset as pre request of the provider (the provider or manufacturer of the registered product) is sent to the terminal 100. Accordingly, if the chemical substances (a combination of chemical substances) estimated by the IMS data 129 obtained by the IMS sensor 120 are registered in the product/service database 23, the information obtained by the user will be in a range that is permitted or set by the provider of the product/service.

For this reason, according to the wishes of the provider of the product/service, it is possible to make the recipe of an odor available as content and also possible to avoid making the recipe of an odor available. In addition, the provider of the product/service can use an opportunity when the chemical substance (or combination of chemical substances) estimated based on the IMS data 129 obtained by the IMS sensor 120 is registered in the product/service database 23 to effectively provide promotion/advertising relating to products or services to a user who can be easily targeted for such products or services.

The management unit 38 of the search server 30 includes a function for billing a provider of the content, who in many cases is the provider (manufacturer) of a product or service, depending on (in response to, in keeping with) the provision of content. One method of billing is to bill in keeping with the frequency (number of times) content is transmitted to the terminal 100 of a user. Alternatively, billing may be carried out when products or services are registered in the product/service database 23 to enable content to be provided. In addition, billing may be carried out in keeping with the period for which content is continuously supplied, which means that there is a variety of billing methods. Billing information is sent to the billing management server 6 and the bill is settled according to a suitable settlement method.

The management unit 38 further includes a function for managing users of the terminal 100. It is also possible to bill the user for the provision of chemical substances and information relating to such to the user terminal 100. In addition, information relating to users to whom the content related to the registered products or services has been provided can be supplied within a permitted range to the provider of the content. The provider of the products or services provides content in response to the event information 139 and efficiently acquires information on users and the market relating to the products or services for which content has been provided, which is useful in product development and the like.

If a chemical substance that could possibly cause harm to the user is detected during the process where the first search unit 31, the second search unit 32, and the third search unit 33 match the data included in the event information 139 against various patterns of chemical substances, the warning supplying unit 36 of the search server 30 transmits an emergency warning to the user terminal 100.

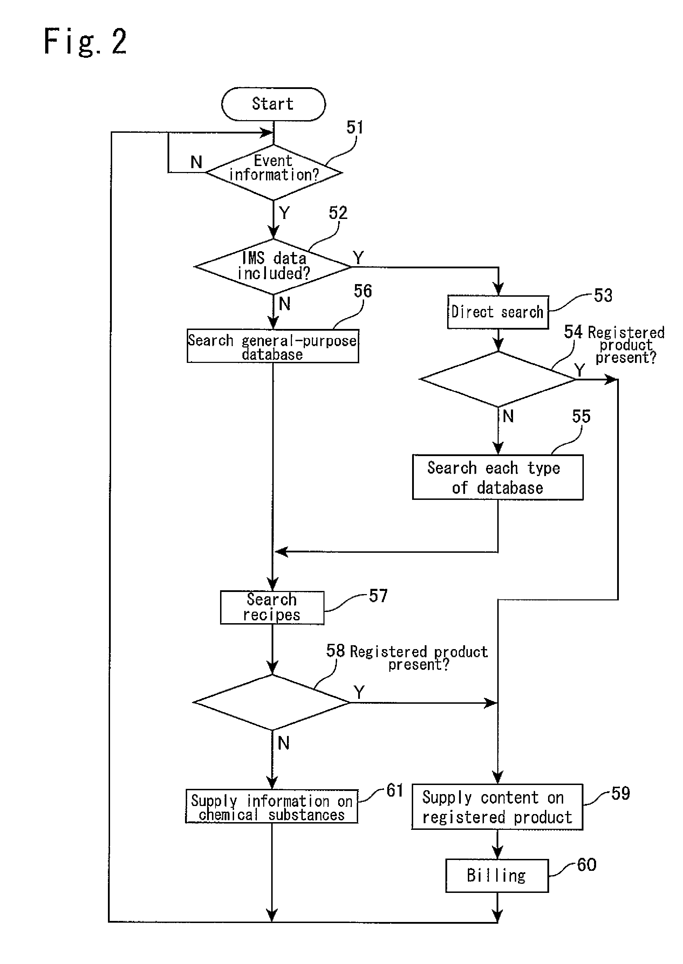

FIG. 2 shows the processing by the search server 30 by way of a flowchart. If, in step 51, the interface unit 37 has acquired the event information 139 from the terminal 100 via the communication unit 39, in step 52 it is determined whether IMS data 129 is included in the event information 139. If IMS data 129 that is unique to the sensor is included, in step 53 the first search unit 31 directly matches the IMS data 129 against the product/service unique patterns 23b. If, in step 54, a product/service unique pattern (fingerprint) 23b is included in the IMS data 129, in step 59, the content supplying unit 34 supplies the analysis information 142 including content related to the product or service corresponding to the fingerprint 23b to the terminal 100. In addition, in step 60, the management unit 38 carries out billing based on the supplying of content.

If, in step 54, a product/service unique pattern 23b is not found in the IMS data 129, in step 55 the second search unit 32 refers to the chemical substance databases 22.1 to 22.n that are unique to the respective sensors and estimates the combination of chemical substances included in the IMS data 129. In parallel with this, or before or after, in step 56 the third search unit 33 refers to the general-purpose chemical substance database 21 using the standardized data (FCWS data) for general use included in the event information 139 to estimate the combination of chemical substances included in the event information 139.

Once the combination of chemical substances has been estimated, in step 57 the content supplying unit 34 determines or judges whether the estimated combination of chemical substances includes a combination that is equivalent to or corresponds to a recipe 23a of a registered product or service. If, in step 58, a recipe 23a is included in the estimated combination of chemical substances, it is determined that the combination is a registered product or service and in step 59, the content supplying unit 34 supplies the analysis information 142 including content relating to the product or service corresponding to the recipe 23a to the terminal 100. In addition, in step 60, the management unit 38 carries out billing in keeping with the supplying of content.

If, in step 58, a recipe 23a is not included in the estimated combination of chemical substances, in step 61 analysis information 141 including the combination of chemical substances estimated by the occurrence cause supplying unit 35 is transmitted to the user terminal 100.

Note that although the search server 30 and the data server 20 are set up at the analysis center 10 in the system 1 described above, such servers may be disposed in a distributed manner on the Internet. Also, the servers 20 and 30 are capable of being realized using appropriate computer resources including a CPU and memory. The processing by the servers 20 and 30 can be provided having been recorded on an appropriate recording medium (such as a DVD) as a program (or program product) that causes a computer to operate and/or can be provided via a computer network such as the Internet.

## Claims

1. An apparatus comprising:
a communication unit that exchanges information with a terminal equipped with a detection unit that acquires chemical substance-related information relating to chemical substances included in air;
a function of acquiring, from the terminal, event information including a change in the chemical substance-related information obtained by the detection unit;
a function of estimating at least one chemical substance that is an occurrence cause of the event based on the event information and supplies occurrence cause information including information on the at least one chemical substance to the terminal; and
a function of supplying, when the occurrence cause of the event includes a plurality of chemical substances and a combination of the plurality of chemical substances includes a combination of a plurality of chemical substances that have already been registered relating to a first product or service, content associated with the first product or service in place of the combination of the plurality of chemical substances that have already been registered, to the terminal.

2. The apparatus according to claim 1,
further comprising a function of billing a provider of the content depending on supplying of the content by the function of supplying content.

3. The apparatus according to either claim 1 or claim 2,
wherein the detection unit includes a first type of sensor that outputs the chemical substance-related information,
the function of acquiring acquires the event information including a first type of chemical substance-related information that is unique to the first type of sensor, and
the function of supplying content is operable when the first type of chemical substance-related information includes a specifying pattern produced when a combination of a plurality of chemical substances that have already been registered is detected by the first type of sensor or a product/service unique pattern produced when an odor relating to the first product or service is detected by the first type of sensor, to supply, to the terminal, content related to the first product or service in place of the combination of the plurality of chemical substances that have already been registered.

4. An apparatus comprising:
a communication unit that exchanges information with a terminal equipped with a detection unit that acquires chemical substance-related information relating to chemical substances included in air; and
a function of acquiring, from the terminal, event information including a change in the chemical substance-related information obtained by the detection unit,
wherein the detection unit includes a first type of sensor that outputs the chemical substance-related information,
the function of acquiring acquires the event information that includes a first type of chemical substance-related information that is unique to the first type of sensor,
and the apparatus further comprises a function of supplying, when the first type of chemical substance-related information includes a specifying pattern produced when a combination of a plurality of chemical substances that have already been registered relating to a first product or service is detected by the first type of sensor or when the first type of chemical substance-related information includes a product/service unique pattern produced when an odor relating to the first product or service is detected by the first type of sensor, content associated with the first product or service.

5. The apparatus according to claim 4,
further comprising a function that bills the provider of the content depending on supplying the content by the function of supplying content.

6. The apparatus according to claim 4 or 5,
wherein the first type of sensor is a spectrometric-type sensor that outputs the chemical substance-related information as a spectrum and the specifying pattern and the product/service unique pattern include spectral features, and
the function of supplying content matches a spectrum obtained from the spectrometric-type sensor using the spectral features included in the specifying pattern.

7. A method where an apparatus equipped with a CPU and memory supplies information, the method comprising the apparatus:
acquiring, from a terminal equipped with a detection unit that acquires chemical substance-related information relating to chemical substances included in air, event information including a change in the chemical substance-related information obtained by the detection unit;
estimating at least one chemical substance that is an occurrence cause of an event based on the event information and supplying occurrence cause information including information on the at least one chemical substance to the terminal; and
supplying, when the occurrence cause of the event includes a plurality of chemical substances and a combination of the plurality of chemical substances includes a combination of a plurality of chemical substances that have already been registered relating to a first product or service, content associated with the first product or service to the terminal in place of the combination of the plurality of chemical substances that have already been registered.

8. The method according to claim 7,
further comprising billing the provider of the content depending on the supplying of content.

9. The method according to claim 7 or 8,
wherein the detection unit includes a first type of substance detection sensor that outputs the chemical substance-related information,
the acquiring includes acquiring the event information including a first type of chemical substance-related information that is unique to the first type of sensor,
and supplying the content includes supplying, when the first type of chemical substance-related information includes a specifying pattern produced when a combination of a plurality of chemical substances that have already been registered is detected by the first type of sensor or when the first type of chemical substance-related information includes a product/service unique pattern produced when an odor relating to the first product or service is detected by the first type of sensor, content associated with the first product or service to the terminal in place of the combination of the plurality of chemical substances that have already been registered.

10. A method where an apparatus equipped with a CPU and memory supplies information, the method comprising the apparatus:
acquiring, from a terminal equipped with a first type of sensor unit that acquires chemical substance-related information relating to chemical substances included in air, event information including a first type of chemical substance-related information that is unique to the first type of sensor; and
supplying, when the first type of chemical substance-related information includes a specifying pattern produced when a combination of a plurality of chemical substances that have already been registered relating to a first product or service is detected by the first type of sensor or when the first type of chemical substance-related information includes a product/service unique pattern produced when an odor relating to the first product or service is detected by the first type of sensor, content associated with the first product or service.

11. The method according to claim 10,
further comprising billing the provider of the content depending on the supplying of the content.

12. The method according to claim 10 or 11,
wherein the first type of sensor is a spectrometric-type sensor that outputs the chemical substance-related information as a spectrum and the specifying pattern and the product/service unique pattern include spectral features, and
the supplying of content matches a spectrum obtained from the spectrometric-type sensor using the spectral features included in the specifying pattern.

13. A program executed by an apparatus equipped with a CPU and memory, the program comprising instructions for causing the apparatus:
to acquire, from a terminal equipped with a detection unit that acquires chemical substance-related information relating to chemical substances included in air, event information including a change in the chemical substance-related information obtained by the detection unit;
to estimate at least one chemical substance that is an occurrence cause of the event based on the event information and to supply occurrence cause information including information on the at least one chemical substance to the terminal; and
to supply, when the occurrence cause of the event includes a plurality of chemical substances and a combination of the plurality of chemical substances includes a combination of a plurality of chemical substances that have already been registered relating to a first product or service, content associated with the first product or service in place of the combination of the plurality of chemical substances that have already been registered to the terminal.

14. The program according to claim 13,
further comprising billing the provider of the content in keeping with the supplying of content.

15. The program executed by an apparatus equipped with a CPU and memory, the program comprising instructions for causing the apparatus:
to acquire, from a terminal equipped with a first type of sensor unit that acquires chemical substance-related information relating to chemical substances included in air, event information including a change in a first type of chemical substance-related information that is unique to the first type of sensor; and
to supply, when the first type of chemical substance-related information includes a specifying pattern produced when a combination of a plurality of chemical substances that have already been registered relating to a first product or service is detected by the first type of sensor or when the first type of chemical substance-related information includes a product/service unique pattern produced when an odor relating to the first product or service is detected by the first type of sensor, content associated with the first product or service.
